# EUROPEAN PATENT APPLICATION

(11) **EP 3 401 645 A2**
(43) Date of publication of application: **14.11.2018**
(21) Application number: 18168267.5
(22) Date of filing: 19.04.2018
(51) Int. Cl.: G01D 11/24

(54) **SYSTEM FOR MOUNTING SENSORS**

(30) Priority: 19.04.2017 US 201762487141 P; 24.04.2017 US 201762488950 P; 10.05.2017 US 201762504190 P; 20.06.2017 US 201762522286 P; 27.06.2017 US 201762525333 P
(71) Applicant: Kozdras, Richard, Morriston, Ontario N0B 2C0 (CA)
(72) Inventor: Kozdras, Richard, Morriston, Ontario N0B 2C0 (CA)
(74) Representative: Hynell Patenttjänst AB

(57) **Abstract**

A kit for use with a wireless sensor, the kit comprising: a backer plate; and a cover plate, the cover plate adapted to be secured to the backer plate and provided with an adaptation which allows for ready receipt of the wireless sensor.

## Description

### FIELD OF THE INVENTION

The invention relates to the field of sensors.

### BACKGROUND OF THE INVENTION

Great advances are being made in the construction of wireless sensors. However, the rate of adoption of these sensors could be improved.

### SUMMARY OF THE INVENTION

Forming one aspect of the invention is a kit for use with a wireless sensor. The kit comprises a backer plate and a cover plate. The cover plate is adapted to be secured to the backer plate and provided with an adaptation which allows for ready receipt of the wireless sensor.

According to another aspect, the backer plate can have a pair of apertures spaced apart 3.25" from one another.

According to another aspect, the kit can further comprise a strip of double-sided tape and the backer plate can have a planar back surface and a boss surface arranged substantially coplanar with the back surface and spaced therefrom a distance less than the thickness of the tape, whereby the double-sided tape can be applied to the back surface and to a planar substrate to retain the boss surface in abutting relationship to the planar substrate.

According to another aspect, the kit can further comprise a plurality of magnets; and the backer plate can have defined therein, for each of the plurality of magnets, a socket presenting opposite to the planar back surface and adapted to receive said each magnet, whereby the magnets can be fitted in the sockets to retain the backer plate to a planar metallic substrate.

According to another aspect, the kit can further comprising a pair of pipe clamps; and the backer plate can be adapted for receipt of the pipe claims, whereby the pipe clamps can be secured to the backer plate to retain the backer plate to a pipe.

According to another aspect, the adaptation can be a plurality of pin holes defined in the cover plate.

According to another aspect, an inductive charging plate can be disposed in the cover plate or the backer plate and adapted to be coupled to a power source to power the sensor inductively.

Forming another aspect of the invention is apparatus for use with a wireless sensor, a backer plate and a cover plate, the cover plate being adapted to be secured to the backer plate and provided with an adaptation which allows for ready receipt of the wireless sensor, the apparatus comprising: a plurality of photovoltaic cells adapted to be readily coupled to the sensor and adapted to be mounted to the cover plate.

According to another aspect, the adaptation that allows for ready coupling of the wireless sensor can be a jack.

According to another aspect, the jack can be a USB jack, the plurality of photovoltaic cells can define a cubic structure, the adaptation that allows for mounting of the apparatus to the cover plate can include a mounting flange and the jack can be coupled to the photovoltaic cells via a battery defined interiorly of the photovoltaic cells.

Forming yet another aspect of the invention is a method for powering a sensor. The method comprises the steps:
placing, within a light fixture designed for use with a stock lighting element having a luminance, an alternate lighting element having a luminance higher than that of the stock lighting element,
placing, within the light fixture, a photovoltaic cell structure adapted to produce power for the sensor by absorbing light,
characterized in that the luminance of the stock lighting element plus the light absorbed by the photovoltaic cell approximates the luminance of the alternate lighting element.

According to another aspect, the efficiency of the alternate lighting element can be higher than the efficiency of the stock lighting element such that the power consumed by the alternate lighting element is lower than the power consumed by the stock lighting element.

Forming yet another aspect of the invention is apparatus for powering a sensor and for use with a lighting fixture having a knock-out, the apparatus comprising: a power supply adapted to be seated in the knock-out and adapted to be coupled to the sensor.

Other advantages, features and characteristics of the present invention will become evident upon a review of the following detailed description with reference to the appended drawings, the latter being briefly described hereinafter.

### BRIEF DESCRIPTION OF THE DRAWINGS

- FIG. 1: shows the components of a system according to an exemplary embodiment of the invention
- FIG. 2: is another view of the structure of encircled area 2 of FIG. 1
- FIG. 3: is a view of the structure of encircled area 3 arranged for use with the structure of encircled area 2
- FIG. 4: is a view of the structure of encircled area 4 arranged for use with the structure of encircled area 2
- FIG. 5: is a view of the structure of encircled area 5 arranged for use with the structure of encircled area 2
- FIG. 6: is a view of the structure of encircled area 6 arranged for use with the structure of encircled area 2
- FIG. 7: is a view of the structure of encircled area 7 arranged for use with the structure of encircled area 2
- FIG. 8A: is a view of a tool according to another aspect of the invention;
- FIG. 8B: is another view of the tool of FIG. 8A;
- FIG. 9: is a side view of a clamp that forms another aspect of the invention;
- FIG. 10: is a view of the structure of FIG. 9 in use with the structure of FIG. 2;
- FIG. 11: is a view of a solar apparatus that forms another aspect of the invention;
- FIG. 12: is a view of the structure of FIG. 11 in use with the structure of FIG.7;
- FIG. 13: is a view of a bracket that forms another aspect of the invention; and
- FIG. 14: is a view of the structure of FIG. 13 coupled to a prior art bar clamp.
- FIG. 15: is a view of a flexible mount arrangement that forms another aspect of the invention; and
- FIG. 16: is a view of an adapter that forms yet another aspect of the invention.

### DETAILED DESCRIPTION

Forming one aspect of the invention is a system.

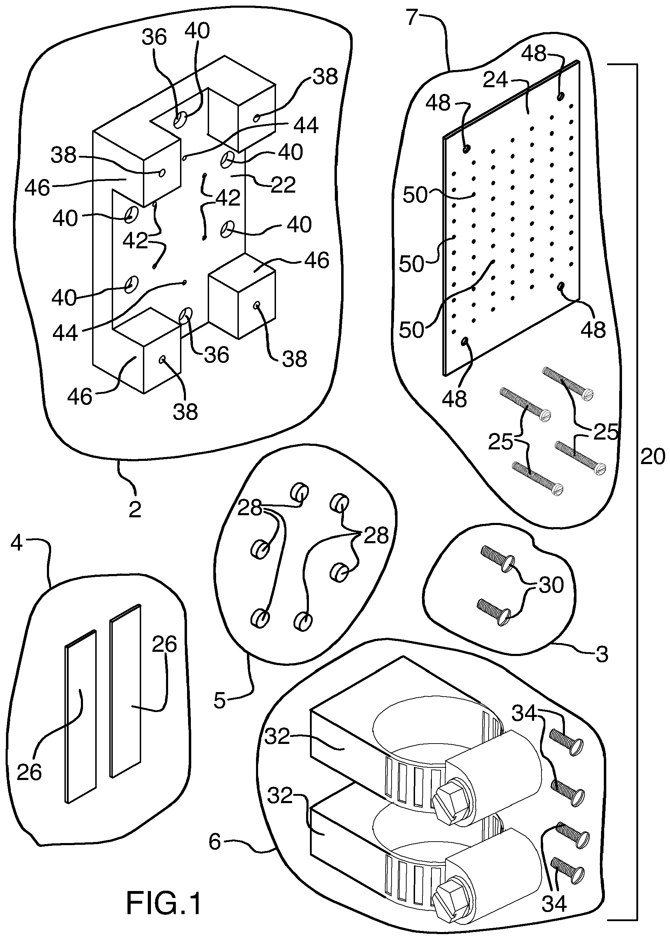

As indicated in FIG. 1, the system 20 comprises the following components: backer plate 22, cover plate 24, cover plate mounting screws 25, strips 26, magnets 28, backer mounting screws 30, pipe clamps 32, clamp mounting screws 34.

The backer plate 22 has a pair of mounting holes 36, four bores 38, six sockets 40, four apertures 42, two voids 44 and a hollow 45. The bores 38 are defined in protruding posts 46.

The cover plate 24 has four apertures 48 and a plurality of pin holes 50.

The cover plate mounting screws 25 are sized to permit passage through apertures 48 and to be threadingly received by bores 38.

The strips 26 are each defined by double-side tape.

The magnets 26 are Neodymium and are sized for receipt by sockets 40.

The backer mounting screws 30 are sized to permit passage through holes 36.

The pipe clamps 32 have sockets defined therein (not shown)

The clamp mounting screws 34 are adapted to pass through apertures 42 and be threadingly received by the sockets of the pipe clamps 32.

The system facilitates mounting of sensors in industrial facilities through the use of the backer plate:

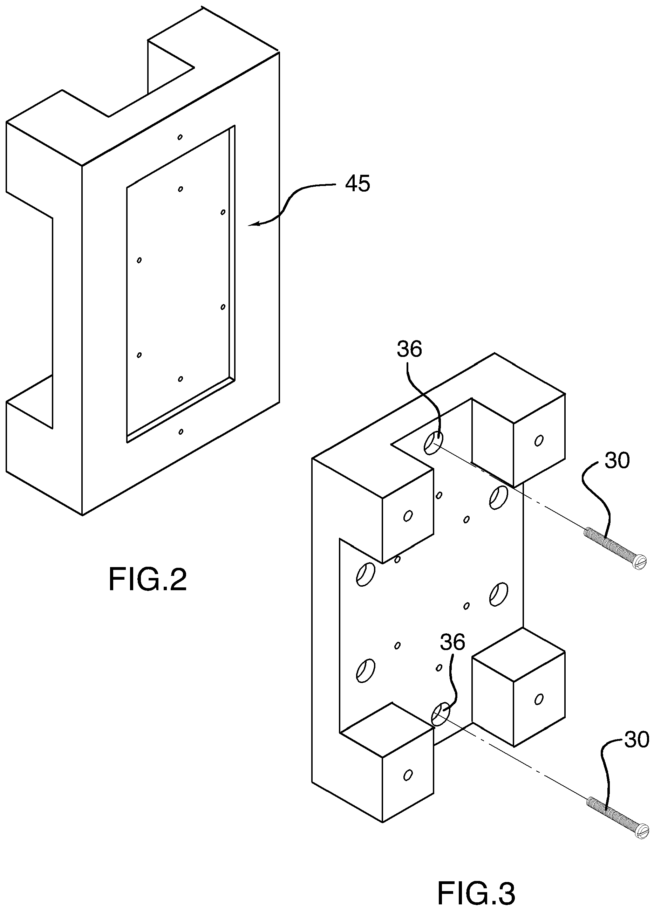

- FIG. 3 shows screws 30 arranged so as to mount the backer plate to a conventional electrical receptacle box

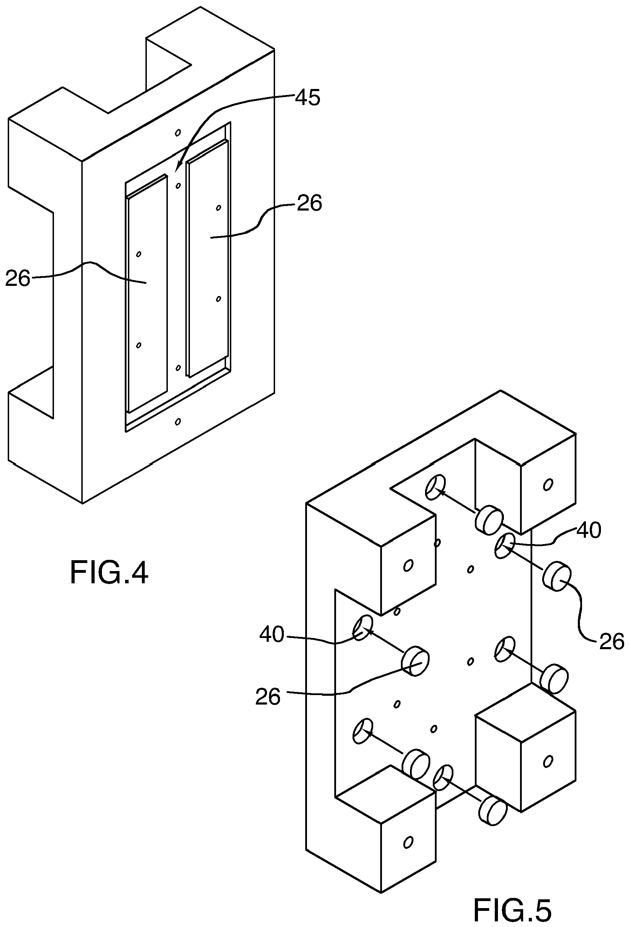

- FIG. 4 shows double-sided tape strips secured in the hollow 45, thereby to allow the backer plate to be adhesively mounted to a wall or other planar surface
- FIG 5. shows magnets 26 arranged for receipt by sockets, to mount the backer plate to a metal planar surface, such as a cabinet

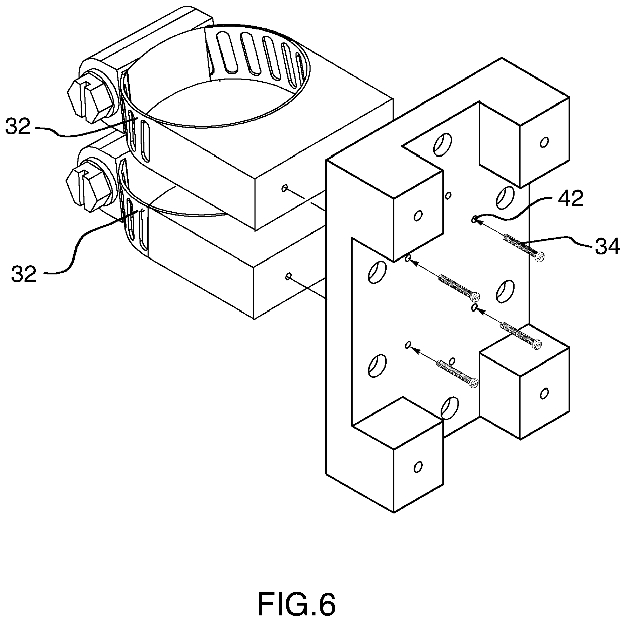

- FIG. 6 shows clamp mounting screws 34 positioned for passage through apertures 42 into the sockets of the pipe clamps 32, thereby to allow the bracket to be mounted to a pipe or the like

Backer plate can also be mounted to a wood or similar surface by screws or the like driven through voids 44, not shown.

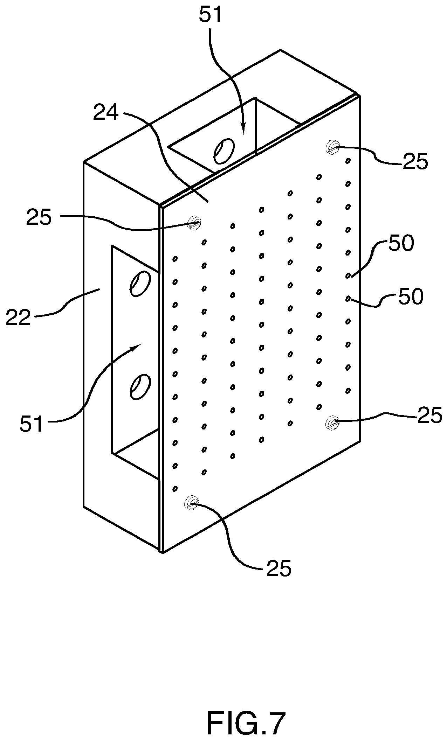

FIG. 7 shows the manner in which the backer plate 22 is used, namely, to provide a mounting surface for the cover plate 24, which is secured in place via cover plate mounting screws 25 which engage bores 38.

The pin holes 50 allow for sensors from a broad variety of manufacturers to be conveniently mounted to the cover plate.

FIG. 7 also shows channels 51 that are defined when the cover is so secured.

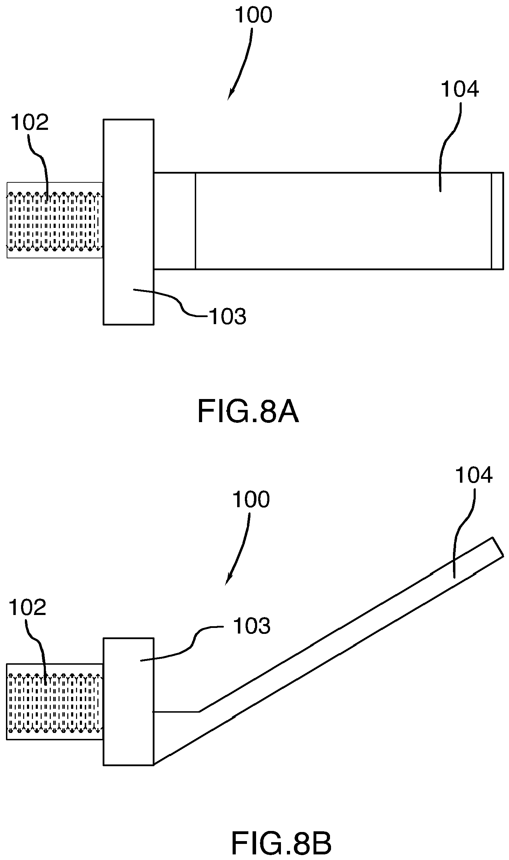

FIGS. 8A, 8B show a tool 100 that enables the assembly of FIG. 7 (when functionalized with the magnets or the tape) to be easily positioned at elevated locations.

Tool 100 will be seen to have a threaded end 102, an abutment 103 and an angularly projecting finger 104.

To mount the assembly, one merely threads the tool on a telescopic pole, of the type used for paint rollers and the like, fits the assembly such that the finger 104 projects into one of the channels 51, and places the assembly as desired, to be held by the magnets or tape as desired. The assembly can be removed, for service and the like, by fitting the finger 104 into the channel until such time as the abutment engages, and then pivoting the assembly, to separate the tape/magnet from the substrate.

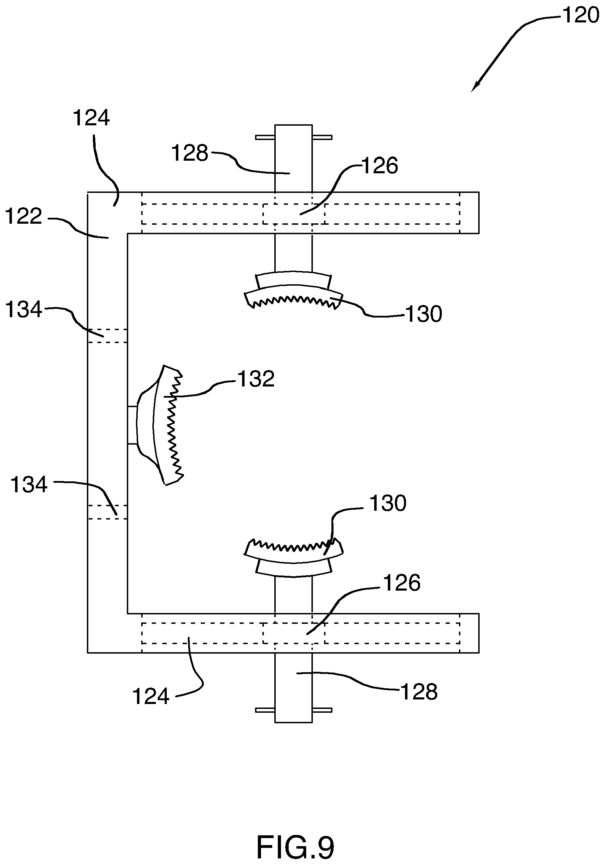

FIG. 9 shows a clamp 120 that forms another inventive aspect of the invention. The clamp has a C-shaped body 122. In the opposed arms of the body 122, passages 124 are defined, each passage having captured therein a caged nut 126. Through each caged nut, a turnscrew 128 extends, terminating in an arcuate pad 130. A further arcuate pad 132 projects from the body, intermediate the arms. Threaded bores 134 are defined in flanking relation to the pad 132.

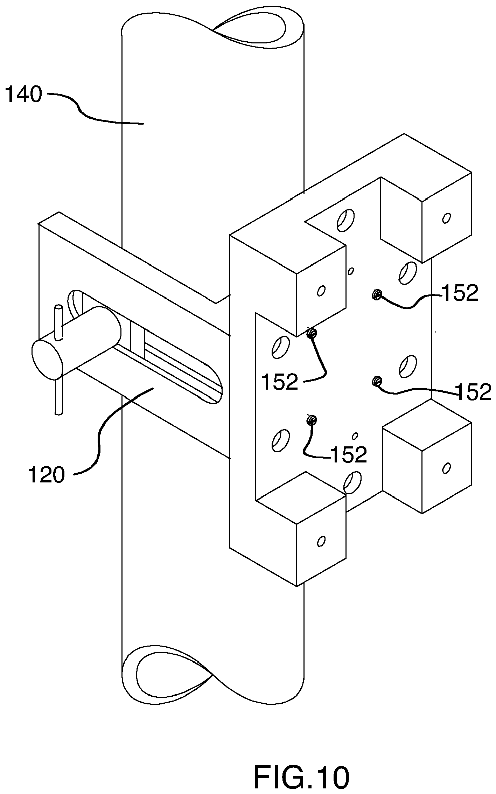

In occasions when the assembly needs to be mounted to, for example, an oversized pipe, the clamp can be utilized, as suggested by FIG. 10, wherein the clamp 120 is shown affixed to a pipe 140 and the structure of FIG. 2 is shown secured to the clamp by screws 152 that engaged threaded bores 134. Although not easily seen, it will be understood that the pads 130,132 have variable radii, thereby to enable the pads to grip pipes of a broad range of diameters.

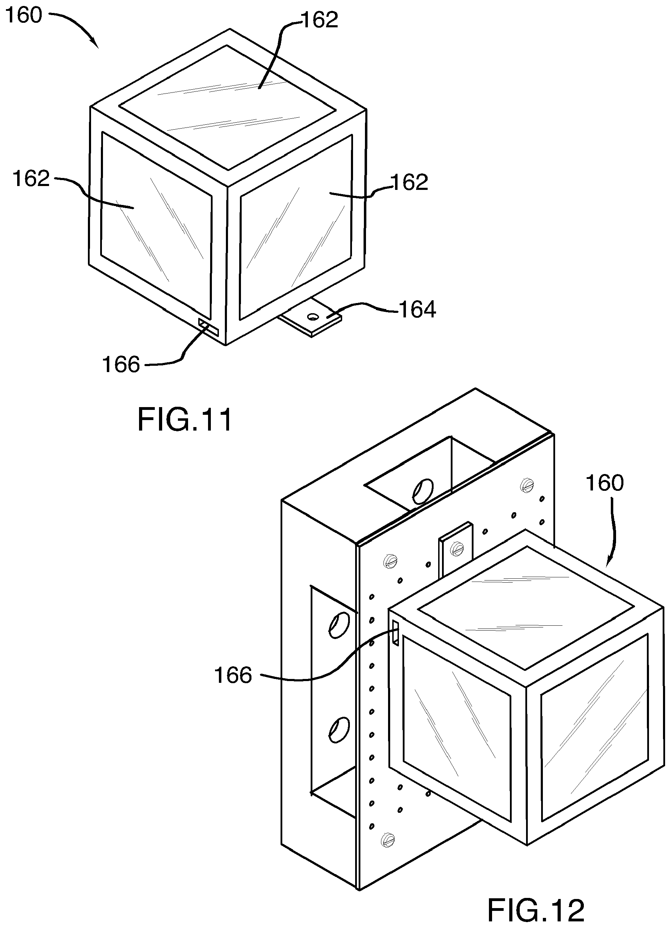

FIG. 11 shows a solar collector 160 that forms another aspect of the invention. The collector 160 is generally cubic, with photovoltaic cells 162 on five of the six faces thereof. A pair of mounting flanges 164 extend from the sixth face. A USB jack 166 is provided on the collector 160 and is mounted to the cells via an intermediate battery, not shown.

The mounting flanges 164 permit the collector 160 to be easily mounted to the structure of FIG. 7, as shown in FIG. 12. The structure of FIG. 12 provides a convenient mechanism to power sensors, when grid power is not easily available and battery exchange is inconvenient: the structure of FIG. 12 can be mounted adjacent the sensor to be powered and in an area where light can be gathered, either from interior lights of the facility or from the sun, and a connection can be made from the structure to the sensor using the jack 166 [none of the foregoing shown]. In an exemplary arrangement [not shown] the sensor housing will itself have a USB jack that can be used or receive external battery power or can be used to receive another sensor, and the connection between the cube 160 and a sensor to be powered can be a simple plug-and-play connection between the USB jack 166 of the collector 160 and the USB jack of the sensor. The USB jack 166 will also allow the solar collector 160 to be provided with firmware updates from time to time.

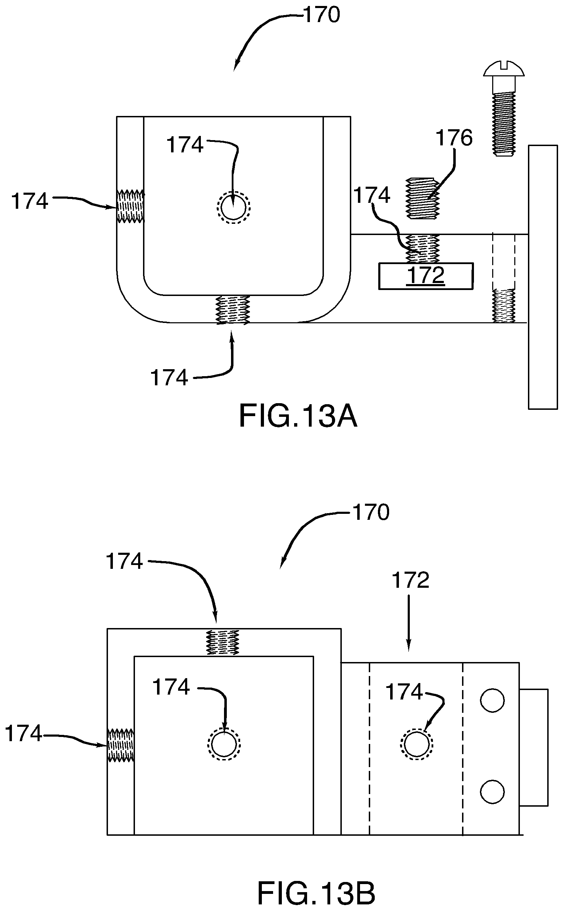

Forming yet another aspect of the invention is a bracket, an exemplary embodiment thereof being shown in FIGS. 13A,13B and designated with general reference 170.

The bracket 170 will be seen to define a channel 172, to have a threaded socket 174 extending into the channel 172, and to have a plurality of threaded bores 174 provided thereon. A set screw 176 is also provided.

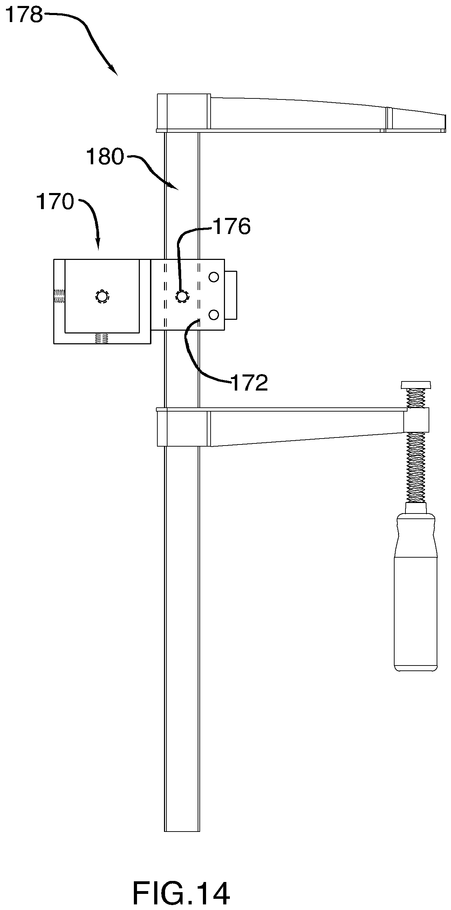

The bracket 170 and set screw 176 are shown assembled to a prior art bar clamp 178 in FIG. 14. Herein, it will be seen that the bar 180 of the bar clamp 178 extends through the channel 172 and gripped by the set screw 176. The bracket 170 provides yet another means for mounting sensors to, for example, tables: a simple prior art bar clamp can be secured to the table, the bracket can be secured to the bar clamp and threaded fasteners can be driven through the sensor and into the threaded bores 174 (not shown), or, where the sensor itself terminates in a threaded shaft, the shaft can be fitted into the threaded bores (not shown).

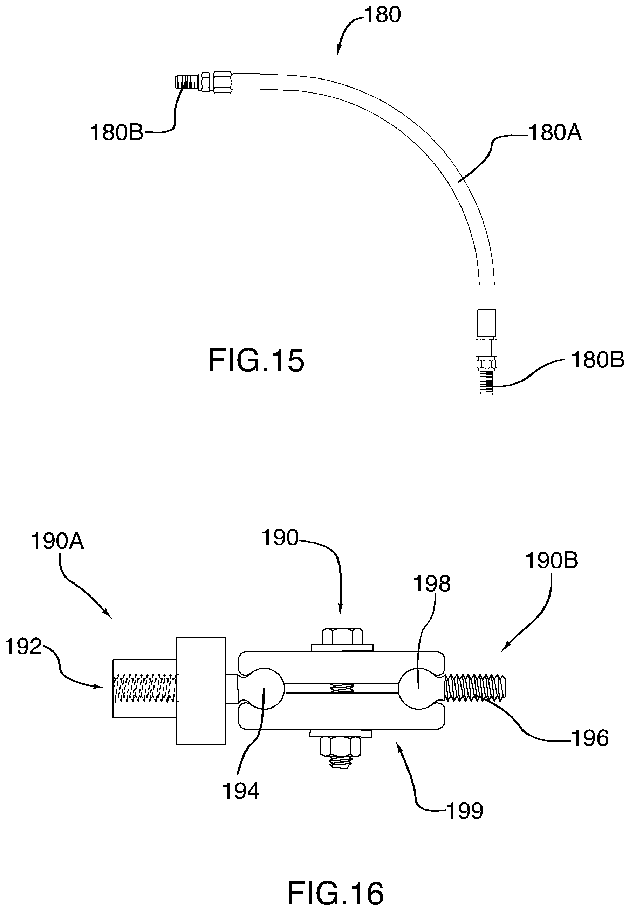

FIG. 15 shows a flexible mount arrangement 180 that can be used with bracket 170. Arrangement 180 has a length 180A of flexible tubing, with threaded mounting studs 180B at each end. One of the threaded mounting studs can be fitted through one of the bores 174 of the bracket 170 and secured in place with a lock washer and a nut (not shown). The other can the threaded mounting studs can be used for securement of the sensor (if the sensor has a suitably threaded bore it can be threaded thereon; alternatively, the threaded studs can be fitted through a suitable aperture in the sensor and received by a nut - not shown)

FIG. 16 shows an adapter 190. The adapter 190 will be seen to have: at one end 190A, a portion defining a female threaded socket 192 and also carrying a ball 194; at the other end 190B, a portion defining a threaded stud 196 and also carrying a ball 198; and a clamp structure 199 having, for each ball, a socket structure, adapted to selectively grip the ball. Persons of ordinary skill will readily appreciate that the threaded female socket of the adapter can be threaded to the free end of the mount arrangement 180, and the threaded stud of the adapter can be secured to a sensor, in the manner previously discussed, to provide for further articulation of the flexible mount.
Yet another aspect of the invention is a method for powering a sensor. In this method, a photovoltaic cell structure is placed interiorly of the housing of a standard tubular light fixture or lamp shade and coupled to the sensor, and to the extent necessary to offset light absorbed by the cells, the light tubes of the fixture are replaced with tubes of higher luminance. It will be evident that this methodology avoids the need for transformers or the like while allowing sensors to be placed easily in close proximity to light fixtures.

Yet another aspect of the invention is a method for powering a sensor. In this method, a suitable transformer or converter is provided in a form factor suitable to be mated to the knock-out that is commonly available in a standard tubular light fixture, coupled to the sensor and seated in the knock-out. It will be evident that this methodology allows sensors to be placed easily in close proximity to light fixtures.

Yet another aspect of the invention is an inductive charging plate disposed in the cover plate or the backer plate and operatively coupled to a power source including but not limited to the photovoltaic cell structure and the transformer indicated above. It will be evident that this methodology allows for sensors of widely-varying current needs to be relatively-easily mounted in a wide variety of locations.

Whereas specific embodiments are herein shown, it will be evident that variations are possible. Without limitation, whereas variants of the sensor are described wherein jacks or ports are provided to receive power from an external power source which itself contains photovoltaics to receive power from sunlight or artificial light, it will be appreciated that this is not necessary, and the external photovoltaic power source could, for example, terminate in structure that is adapted to be fitted into a sensor in the manner of a battery.

Similarly, whereas the external module described specifically mentions photovoltaics, other mechanisms for wireless transmission of energy, focused or otherwise, could be utilized.

Further, whereas a photovoltaic structure is mentioned, it will be understood that this could include one or many solar cells.

Accordingly, this aspect of the invention should be understood as to encompass at least any system which includes sensors that are adapted to be self-powered for a relatively short period of time and power units that receive power wirelessly and are releasably coupled by wires to said sensors to deliver said power thereto to adapt said sensors for operation for a relatively longer period of time.

## Claims

1. A kit for use with a wireless sensor, the kit comprising:
a backer plate; and
a cover plate, the cover plate adapted to be secured to the backer plate and provided with an adaptation which allows for ready receipt of the wireless sensor.

2. A kit according to claim 1, wherein the backer plate has a pair of apertures spaced apart 3.25" from one another;

3. The kit according to claim 1,
further comprising a strip of double-sided tape; and
wherein the backer plate has
a planar back surface and
a boss surface arranged substantially coplanar with the back surface and spaced therefrom a distance less than the thickness of the tape
whereby the double-sided tape can be applied to the back surface and to a planar substrate to retain the boss surface in abutting relationship to the planar substrate.

4. The kit according to claim 1,
further comprising a plurality of magnets; and
wherein the backer plate has defined therein, for each of the plurality of magnets, a socket presenting opposite to the planar back surface and adapted to receive said each magnet,
whereby the magnets can be fitted in the sockets to retain the backer plate to a planar metallic substrate.

5. The kit according to claim 1,
further comprising a pair of pipe clamps; and
wherein the backer plate is adapted for receipt of the pipe claims,
whereby the pipe clamps can be secured to the backer plate to retain the backer plate to a pipe.

6. The kit according to claim 1, wherein the adaptation is a plurality of pin holes defined in the cover plate.

7. The kit according to claim 1, further comprising:
an inductive charging plate disposed in the cover plate or the backer plate and adapted to be coupled to a power source to power the sensor inductively.

8. Apparatus for use with a wireless sensor, a backer plate and a cover plate, the cover plate being adapted to be secured to the backer plate and provided with an adaptation which allows for ready receipt of the wireless sensor, the apparatus comprising:
a plurality of photovoltaic cells adapted to be readily coupled to the sensor and adapted to be mounted to the cover plate.

9. Apparats according to claim 8, wherein the adaptation that allows for ready coupling of the wireless sensor is a jack.

10. Apparatus according to claim 9, wherein the jack is a USB jack, the plurality of photovoltaic cells define a cubic structure, the adaptation that allows for mounting of the apparatus to the cover plate includes a mounting flange and the jack is coupled to the photovoltaic cells via a battery defined interiorly of the photovoltaic cells.

11. A method for powering a sensor comprising the steps:
placing, within a light fixture designed for use with a stock lighting element having a luminance, an alternate lighting element having a luminance higher than that of the stock lighting element,
placing, within the light fixture, a photovoltaic cell structure adapted to produce power for the sensor by absorbing light,
**characterized in that** the luminance of the stock lighting element plus the light absorbed by the photovoltaic cell approximates the luminance of the alternate lighting element.

12. A method according to claim 11, wherein the efficiency of the alternate lighting element is higher than the efficiency of the stock lighting element such that the power consumed by the alternate lighting element is lower than the power consumed by the stock lighting element.

13. Apparatus for powering a sensor and for use with a lighting fixture having a knock-out, the apparatus comprising:
a power supply adapted to be seated in the knock-out and adapted to be coupled to the sensor.
